# EUROPÄISCHE PATENTSCHRIFT

(11) **EP 0 582 798 B1**
(45) Veröffentlichungstag und Bekanntmachung des Hinweises auf die Patenterteilung: **29.10.1997**
(21) Anmeldenummer: 93108755.5
(22) Anmeldetag: 01.06.1993
(51) Int. Cl.: G01S 1/36

(54) **Verfahren und Schaltungsanordnung zur Bestimmung des geographischen Standortes eines Empfängers in einem Gleichwellennetz**
Method and circuit arrangement for determining the geographic position of a broadcast receiver
Procédé et circuit de détermination de la position d'un récepteur de radiodiffusion

(30) Priorität: 15.07.1992 DE 4223194
(43) Veröffentlichungstag der Anmeldung: 16.02.1994
(73) Patentinhaber: GRUNDIG Aktiengesellschaft, 90762 Fürth (DE)
(72) Erfinder: Zumkeller, Markus, Dipl.-Ing., Grundig E.M.V., Kurgartenstrasse 37, W-90762Fürth/Bay. (DE); Reis, Johannes, Dipl.-Ing., Grundig E.M.V., Kurgartenstrasse 37, W-90762Fürth/Bay. (DE)

(56) Entgegenhaltungen:
- EP-A- 0 047 561
- EP-A- 0 341 738
- EP-A- 0 457 031
- GB-A- 1 439 596
- US-A- 3 573 829

## Beschreibung

Die Erfindung geht aus von einem Verfahren nach dem Oberbegriff des Patentanspruchs 1 und von einer Schaltungsanordnung nach dem Oberbegriff des Patentanspruchs 4.

Aufgrund der deutlich gestiegenen Verkehrsdichte, bedingt durch einen stetig steigenden Individual- und Schwerlastverkehr, wird die Verkehrssteuerung immer komplizierter. Gleichzeitig besteht wegen eines sich kontinuierlich vergrößernden Verkehrswegenetzes ein steigender Bedarf an Navigationssystem, um den eigenen Standort zu bestimmen. Hierfür werden in zunehmendem Maße satellitengestützte Verfahren eingesetzt. Beispielsweise ermöglicht das Global-Positioning-System (GPS) weltweit eine sehr genaue Standortbestimmung und findet daher im kommerziellen Bereich (Speditionen) oder unter erschwerten Bedingungen (Hochseeschiffahrt) immer mehr Benutzer. Von Nachteil dabei ist jedoch der relativ hohe Aufwand sowohl für einen Satellitenempfänger als auch für die genaue Auswertung der empfangenen Daten.

Im innerstädtischen Bereich werden Systeme eingesetzt, die beispielsweise bei einem Halt an einer Ampel durch einen Sender einem Empfänger, der sich im Fahrzeug befindet, Informationen senden. Diese Informationen umfassen beispielsweise den gegenwärtigen Standort und die Länge des Staus vor der nächsten Ampel.

Derartige Systeme erfordern für eine optimale Wirksamkeit, daß möglichst viele Kraftfahrzeuge mit derartigen Empfängern ausgestattet sind. Weiterhin sollen möglichst viele Sender vorhanden sein, da die Reichweite derartiger Sender systembedingt gering bleiben muß, um Interferenzen zu vermeiden.

Aus der DE-40 16 025 A1 ist ein Verfahren und eine Schaltungsanordnung der eingangs genannten Art bekannt. Ein in das dort angegebene Gerät eingebauter Rundfunkempfänger ist dabei derart ausgebildet, daß mehrere Radiosender empfangbar sind, die ein um eine Sendelaufzeitdifferenz versetztes, aber sonst identisches Signal ausstrahlen. Weiterhin weist das Gerät einen Speicher auf, in dem die Sendelaufzeitdifferenzen verschiedener Sender abgespeichert sind. Durch die Berechnung der Korrelation der empfangenen Signale, unter Berücksichtigung der abgespeicherten Sendelaufzeitdifferenzen von mindestens zwei Sendern, kann der Standort nach dem Loran C Verfahren berechnet werden.

Von Nachteil bei diesem Gerät ist, daß es mindestens zwei Empfänger aufweisen muß, um zwei verschiedene Sender empfangen zu können. Weiterhin müssen diese Sender nach dem Prinzip des Ballempfangs zusammengeschaltet sein. Ein weiterer Nachteil besteht darin, daß die Sendelaufzeitdifferenzen in einem Speicher des Geräts abgespeichert sein müssen. Bei Änderungen der abgespeicherten Daten durch den Sender werden falsche Standorte berechnet, ohne daß der Benutzer auf einen möglichen Fehler hingewiesen wird.

Aus der EP-A1-0 006 594 ist ein Phasenvergleichs-Hyperbelverfahren bekannt, das dazu dient, flächengebundene Fahrzeuge zu orten. Hierbei wird von einem zu ortenden Fahrzeug ein hochfrequenter Träger gesendet, dem niederfrequente Meßsignale aufmoduliert wurden. Mehrere örtlich getrennte Empfangsstationen empfangen dieses Signal und demodulieren es. Durch den Vergleich des derart erzeugten Meßsignals mit einem in jeder Empfangsstation erzeugten Meßsignal wird über einen Phasenunterschied des Meßsignals die Laufzeit zu den verschiedenen Empfängern und damit die Position des Senders ermittelt. Damit Frequenzabweichungen der Meßsignalgeneratoren in den Empfängern nicht zu falschen Ergebnissen führen, ist zusätzlich ein Referenzsender vorgesehen, dessen Standort bekannt ist. Dadurch können in den Empfängern die Frequenz- oder Phasenfehler der in den Empfängern erzeugten Meßsignale eliminiert werden.

Der Nachteil dieser Verfahren besteht in dem großen Schaltungsaufwand. Es müssen flächendeckend Empfänger und Referenzsender bereitgestellt werden, zudem benötigt jeder Benutzer einen eigenen Sender. Der Standort des Senders (z.B. im Fahrzeug) ist lediglich in einer Auswertungszentrale bekannt, nicht dem Fahrer selbst. Hierfür ist ein zusätzlicher Informationsaustausch erforderlich.

Aufgabe der Erfindung ist es daher, ein Verfahren und eine Schaltungsanordnung der eingangs genannten Art anzugeben, mit deren Hilfe die Ortung eines Fahrzeuges mit eingebautem Empfänger möglichst kostengünstig möglich sein soll.

Diese Aufgabe wird erfindungsgemäß durch die in den Patentansprüchen 1 und 4 dazu angegebenen Merkmale gelöst. Besondere Ausführungsarten der Erfindung sind in den Unteransprüchen angegeben.

Das erfindungsgemäße Ortungsverfahren weist den Vorteil auf, daß keine zusätzlichen Sender erforderlich sind. Beispielsweise können in einem DAB-System die für das Digital-Audio-Broadcasting-Verfahren erforderliche Vielzahl von Sendern, die frequenz- und phasenstarr gekoppelt sind (Gleichwellennetz) zur Standortbestimmung mit verwendet werden. Ein weiterer Vorteil liegt darin, daß keine zusätzlichen Empfänger benötigt werden, da ein für Digital-Audio-Broadcasting geeigneter Rundfunk-Empfänger auch gleichzeitig zur Standortbestimmung mitbenutzt werden kann. Es erweist sich als weiterer Vorteil, daß durch Bildung der Schwebungsfrequenz, die im Vergleich zu einer Einzelträgerfrequenz sehr klein ist, der Standort in einem großen Gebiet eindeutig bestimmbar ist. Weiterhin wird zur Standortbestimmung ausgenutzt, daß beim Digital-Audio-Broadcasting eine Sender- oder Regionalkennung mitgesendet wird.

Das Verfahren nach Patentanspruch 2 weist den Vorteil auf, daß bei einer senderseitig starren Phasenkopplung zweier Einzelträger, diese zur geographischen Standortbestimmung benutzt werden können. Außerdem bieten Einzelträger, die eine möglichst geringe Frequenzdifferenz aufweisen, den Vorteil, den Standort in einem sehr großen Gebiet bestimmen zu können.

Die Verwendung unmittelbar benachbarter Einzelträgerfrequenzen nach Patentanspruch 3 hat den Vorteil, daß der Standort im größtmöglichen Gebiet bestimmt werden kann, ohne Systemmodifikationen durchführen zu müssen.

Die Schaltungsanordnung nach Patentanspruch 4 weist den Vorteil auf, daß der Empfänger selbständig den genauen Standort bestimmen kann.

Die Schaltungsanordnung nach Patentanspruch 5 weist den Vorteil auf, daß auf einer Anzeige zusätzlich zum Standort des Empfängers auch eine Landkarte angezeigt wird, so daß sich der Benutzer besser orientieren kann. Die für die Darstellung der Landkarte erforderlichen Daten werden in vorteilhafter Weise von einem Massenspeicher ausgelesen, für den im Empfänger bereits eine Leseeinrichtung integriert ist. Dies kann beispielsweise ein Kassettenrekorder, CD-Spieler oder eine smart card sein. Ein weiterer Vorteil der Schaltungsanordnung liegt in der Möglichkeit, die vom Massenspeicher ausgelesene Landkarte in verschiedenen Maßstäben mit zusätzlichen Detailinformationen ausgeben zu können. Weitere vom Empfänger empfangene Informationen auf derselben Anzeige darstellen zu können, stellt einen weiteren Vorteil dar.

Die Erfindung wird im folgenden anhand eines Ausführungsbeispieles näher beschrieben und erläutert. Es zeigen:
- Fig. 1a: die Anordnung der Einzelträgerfrequenzen für ein länderbezogenes Gleichwellennetz,
- Fig. 1b: den Zeitmultiplexrahmen für das Gleichwellennetz nach Fig. 1a,
- Fig. 2: die Schwebungsfrequenzen zweier Sender,
- Fig. 3: die Eindeutigkeitsbereiche des Hyperbelverfahrens und
- Fig. 4: eine Schaltungsanordnung zur Durchführung des Verfahrens.

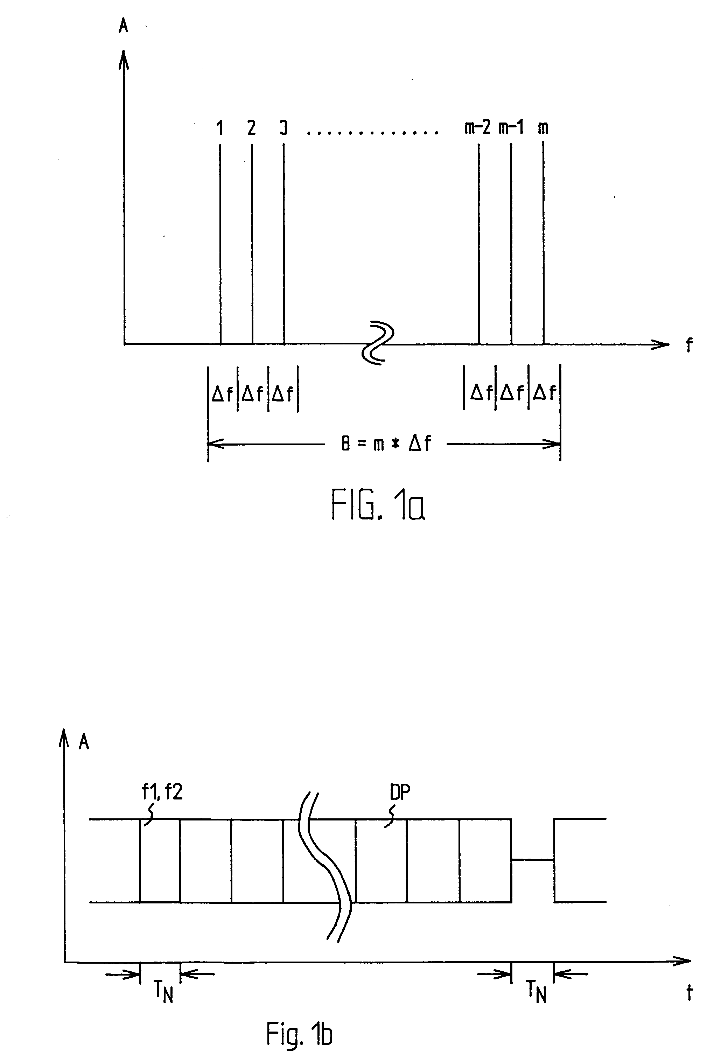

Fig. 1a zeigt, wie die Trägerfrequenzen beim DAB äquidistant mit dem Frequenzabstand Δf über die Übertragungsbandbreite B verteilt sind. Da die Übertragung im Gleichwellenbetrieb erfolgt, sind die Modulationsinhalte der einzelnen Träger für alle Sendestationen eines Sendegebietes identisch; weiterhin weisen alle Sendestationen eines Sendegebietes eine frequenz- und phasenstarre Kopplung auf. Bei einem Zeitmultiplexbetrieb werden die Daten verschiedener Programme in verschiedenen Datenpaketen DP in zeitlicher Reihenfolge übertragen, wie in Fig. 1b gezeichnet.

Um im Empfänger eine möglichst niederfrequente Schwingung aus einem Sendersignal zu erhalten, wird die Schwebungsfrequenz durch Addition von zwei in der Frequenz benachbarten Trägerfrequenzen erzeugt. Die Schwebungsfrequenz beträgt daher Δf/2. Die Verwendung benachbarter Trägerfrequenzen bietet den Vorteil, daß ohne Systemänderungen eine möglichst große Wellenlänge der Schwebungsfrequenz vorliegt. Alternativ hierzu könnten auch zwei zusätzliche Signale im Gleichwellenbetrieb gesendet werden, deren Frequenzen sich nur geringfügig unterscheiden. Dadurch kann zwar in einem noch größeren Gebiet der Standort bestimmt werden, es sind jedoch Änderungen der Sender und zusätzliche Übertragungsbandbreite erforderlich.

Um sicherzustellen, daß die Schwebungsfrequenz für jeden Sender identisch ist, werden nur unmittelbar benachbarte Trägerfrequenzen zur Bildung der Schwebungsfrequenz addiert, da der Frequenzabstand Δf für alle unmittelbar benachbarten Trägerfrequenzen identisch ist.

Eine weitere Voraussetzung zur Bestimmung des Standorts ist eine konstante und dem Empfänger bekannte Phasendifferenz der zur Bildung der Schwebungsfrequenz verwendeten Trägerfrequenzen. Diese Voraussetzung wird, da die Trägerfrequenzen phasenmoduliert sind, nicht generell erfüllt, so daß diese Voraussetzung folgende, zusätzliche Maßnahmen erforderlich macht.

Es besteht die Möglichkeit, im Zeitschlitz T_{N} des Null-Symbols, wie in Fig. 1b dargestellt, ein oder mehrere geeignete Signale, beispielsweise benachbarte Trägerfrequenzen f₁ und f₂, mit gleicher Phase auszusenden, da die Energie nur weniger zusätzlicher Einzelträger die Null-Symbol-Synchronisation nicht beeinflußt. Durch das Aussenden von in unterschiedlichen Frequenzbereichen liegenden Einzelträgerfrequenzpaaren wird die Fadingsensitivität reduziert. Um die im Null-Symbol während T_{N} gesendeten Trägerfrequenzen für jeden Sender unterscheiden zu können, werden für jeden Sender andere Frequenzpaare ausgesendet. Dadurch ergeben sich genügend Kombinationsmöglichkeiten, so daß keine aneinandergrenzenden Funkversorgungsbereiche einzelner Sender zur gleichen Zeit identische Frequenzen zur Bildung der Schwebungsfrequenz aufweisen.

Weiterhin besteht die Möglichkeit, einen Speicher SP im Empfänger zu integrieren und diesen Speicher SP in Abhängigkeit von den im Null-Symbol empfangenen Trägerfrequenzen zu adressieren. Die im Speicher SP abgelegten Daten können unter anderem die geographische Position des Senders, eine Liste mit den vom Sender ausgestrahlten Programmen und deren Anordnung im Zeitmultiplex-Rahmen, eine Liste mit benachbarten Sendern usw. beinhalten.

Um die ungefähren Standorte der empfangenen Sender oder den ungefähren Standort des Empfängers zu ermitteln, gibt es mehrere Möglichkeiten. Die erste ist, daß die Senderstandorte im Empfänger abgespeichert und im Nullsymbol empfangene Trägerfrequenzen, die automatisch auch eine Senderkennung darstellen, bekannt sind. Je mehr Sender gleichzeitig empfangen werden, um so genauer kann der Standort angegeben werden, da dieser nur in dem Gebiet liegen kann, in dem diese Sender auch eine ausreichende Feldstärke aufweisen.

Weiterhin kann, bei bekannter Senderleistung, auch die Feldstärke des Funkfeldes eines oder mehrerer Sender herangezogen werden. Die Beurteilung einer breitbandigen, zeitlich gemittelten Feldstärkemessung gibt die Möglichkeit, den Standort genauer zu bestimmen als bei einer Auswertung der Senderkennung. Die breitbandige zeitliche Mittelung der Feldstärke ermöglicht es dabei, zeit- und frequenzselektive Signaleinbrüche oder Störungen weitgehend auszuschalten. Wichtig ist hierbei, daß jeweils nur Signale eines Senders zur Messung verwendet werden, so daß sich insbesondere die im Null-Symbol übertragenen Trägerfrequenzen zur Messung eignen.

Eine weitere Möglichkeit besteht darin, eine Korrelation zwischen Kanalimpulsantwort und den Empfangspegeln der im Null-Symbol übertragenen Trägerpaare zu bestimmen. Aus den Abstandsdifferenzen der berechneten Maxima ergeben sich die Abstandsdifferenzen zu den einzelnen Sendern.

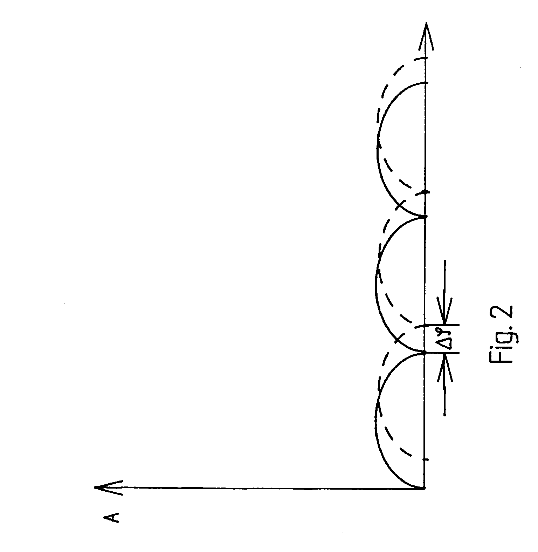

Ist nun der Standort des Empfängers ungefähr bekannt, werden die Stellen mit minimaler Signalamplitude der Schwebungsfrequenzen bestimmt. Um ein möglichst genaues Ergebnis zu erhalten, wird aus mehreren Perioden der Schwebungsfrequenz diejenige ausgewertet, deren Minimum zuerst auftritt. Dadurch werden Signale herausgefiltert, die durch Mehrwegeempfang verfälscht wurden. Sind für mindestens zwei Schwebungsfrequenzen diese Stellen minimaler Signalamplitude gefunden, läßt sich der Phasenunterschied Δϕ bestimmen, wie in Fig. 2 dargestellt.

Alternativ hierzu läßt sich die gesuchte Phasendifferenz Δϕ aus den Winkelunterschieden der jeweiligen Trägerpaare zweier Sender berechnen.

Es wird jeweils eine Stelle minimaler Amplitude der beiden Schwebungsfrequenzen einander zugeordnet. Bei dieser Zuordnung wird zunächst eine Nullstelle einer beliebigen ersten Schwebungsfrequenz ausgewählt und die Phasendifferenz zu derjenigen Nullstelle einer zweiten Schwebungsfrequenz bestimmt, die in einem Bereich von ± 90^{o} um die Nullstelle der ersten Schwebungsfrequenz liegt. Diese zunächst beliebige Zuordnung wird im folgenden durch die Übereinstimmung von ungefährem Standort und exaktem Standort gerechtfertigt. Bei einer Schwebungsfrequenz von z.B. 500 Hz beträgt die Wellenlänge 600 km, die Schwebungsfrequenz ist aber nur betragsmäßig bekannt, so daß sich der Eindeutigkeitsbereich auf 300 km verringert, was einem Bereich von - 90° bis + 90° entspricht. Somit erhält man bei einer Schwebungsfrequenz von 500 Hz einen Eindeutigkeitsbereich von mindestens 300 km (auf der Verbindungslinie zwischen den beiden Sendern).

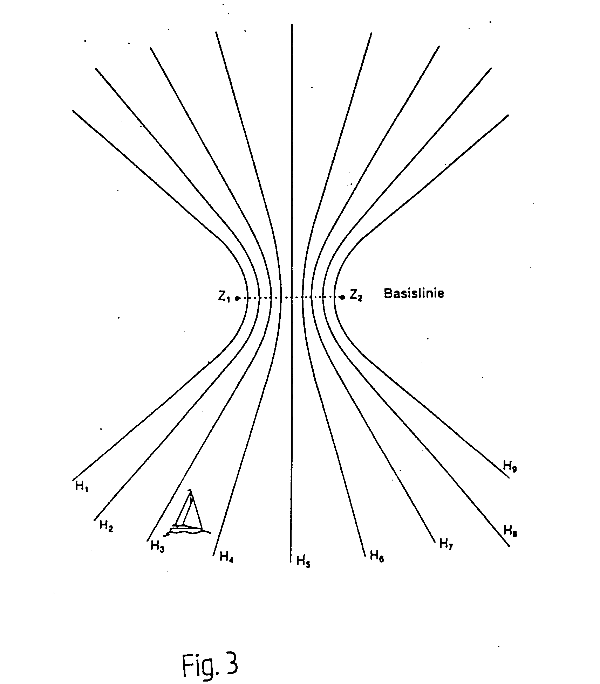

Fig. 3 zeigt eine Hyperbelschar H₁ bis H₉, die mittels bekannter Verfahren (Loran C, Decca) aus der Schwebungsfrequenz der beiden Sender Z1 und Z2 berechnet wird. Bei konstanter Phasendifferenz Δϕ ergibt sich als geometrischer Ort des möglichen Aufenthaltes (Standlinie) eine Hyperbel. Wird für einen Sender Z1 und Z2 und anschließend für einen weiteren Sender Z3 und Z1 oder Z3 und Z2 die Phasendifferenz und die Hyperbel berechnet, ergibt sich der tatsächliche Standort aus den identischen Lösungen (den Schnittpunkten) der Hyperbeln. Da die Wellenlänge der Schwebungsfrequenz groß ist, liegen diese ermittelten Standorte weit auseinander und alle, bis auf einen, scheiden aufgrund des bekannten, ungefähren Standorts als exakter Standort aus. Der Standort des Empfängers ist somit eindeutig bestimmbar. Durch Berechnung zusätzlicher Hyperbeln, die jeweils aus den Schwebungsfrequenzen zweier verschiedener Sender berechnet werden, können die Ergebnisse für den Standort durch Interpolation weiter verbessert werden.

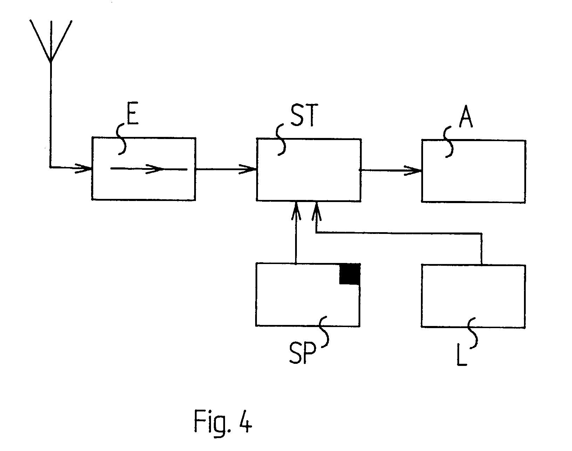

In Fig. 4 ist eine Schaltungsanordnung zur Standortbestimmung gezeichnet. Im Empfänger E für das Digital-Audio-Broadcasting-Verfahren werden durch Addition je zweier benachbarter Trägerfrequenzen die Schwebungsfrequenzen gebildet. Eine Steuereinheit ST erfaßt die Phasenunterschiede Δϕ der Schwebungsfrequenzen und decodiert das Auftreten der verschiedenen Einzelträgerfrequenzen sowie deren zeitliche Abfolge. Die Einzelträgerfrequenzen dienen dabei sowohl dazu, die Schwebungsfrequenz zu bilden, als auch Information zum Empfänger zu übertragen. Ist der Sender aufgrund dieser Information bekannt, wird ein Speicher SP entsprechend adressiert, um den Senderstandort und weitere Informationen über diesen Sender auszulesen, die in einem senderspezifischen Datensatz abgespeichert sind. Falls aufgrund der Feldstärkeverhältnisse mehrere Sender empfangen werden können, werden auch deren Datensätze aus dem Speicher SP ausgelesen. Die Datensätze können beispielsweise einen Sendernamen, Fequenzbereiche angrenzender Sender, Standortangaben usw. enthalten, die teils angezeigt werden, teils aber auch geräteintern zur Empfangsoptimierung, z.B. durch Wechsel in ein anderes Gleichwellen-Sendersystem, verwendet werden. Durch die Information zum Standort einer oder mehrerer Sender, die empfangbar sind, ist auch der eigene Standort ungefähr bekannt.

Aus der Phasendifferenz Δϕ und dem ungefähren Standort kann dann der genaue Standort durch die Steuereinheit ST nach einem Phasenvergleichs-Hyperbelverfahren berechnet werden. Dieser wird auf einer Anzeige A dargestellt. Um dem Benutzer die Standortinformation in einem sinnvollen Zusammenhang darzustellen, kann auf der Anzeige A auch eine Landkarte in verschiedenen Maßstäben dargestellt werden. Die hierfür benötigten Daten werden über ein Lesegerät L von einem Massenspeicher, z.B. Compakt Disk oder Magnetbandkassette ausgelesen. Der Maßstab der Darstellung kann gewechselt werden. Um die Darstellung nicht unübersichtlich werden zu lassen, können Detailinformationen wie Straßennamen oder Hausnummern ab einem bestimmten Maßstab auch weggelassen werden. Der Wechsel des Maßstabes kann benutzergesteuert, in Abhängigkeit vom Standort oder von der Geschwindigkeit erfolgen. Dadurch ist es möglich, innerorts bei niedrigen Geschwindigkeiten ein kleines Gebiet auf der Anzeige A mit vielen Detailinformationen anzuzeigen, außerorts aber, z.B. auf der Autobahn, ein großes Gebiet darzustellen. Zusätzlich zu den graphischen Daten einer Landkarte sollen auch sonstige Informationen auf der Anzeige A darstellbar sein, die dem Empfänger gesendet wurden oder die aus dem Speicher SP ausgelesen wurden.

Aufgrund der vorhandenen Standortinformation besteht die Möglichkeit, eine Auswahl unter den empfangene Informationen (z.B. TMC-Daten) zu treffen.

Weiterhin besteht die Möglichkeit berechnete Standorte zwischenzuspeichern und aus der Standortänderung eine Bewegungsrichtung zu berechnen und in der Anzeige A anzuzeigen.

Um die Genauigkeit des beschriebenen Verfahrens noch zu steigern, besteht die Möglichkeit, die berechneten Ergebnisse auf ihre Plausibilität zu überprüfen. Man kann beispielsweise den Verlauf aufeinanderfolgender Standortberechnungen auf ihre Stetigkeit hin überprüfen. Durch Vergleich gegebener, geographischer Daten mit dem berechneten Standort können Korrekturen der berechneten Standorte durchgeführt werden.

## Patentansprüche

1. Verfahren zur Bestimmung des geographischen Standortes eines Empfängers in einem Gleichwellennetz, bei welchem empfangsseitig je zwei von Sendern übertragene Signale gleicher Frequenz verglichen werden, der Phasenunterschied zur Bildung der Laufzeitdifferenz ausgewertet wird und der aktuelle Standort nach einem Phasenvergleichs-Hyperbelverfahren ermittelt wird,
**dadurch gekennzeichnet**,
daß im Gleichwellennetz mehrere Einzelträgerfrequenzen gleichzeitig zur Nachrichtenübertragung verwendet werden,
daß aus je zwei verschiedenen, von einem Sender zur Nachrichtenübertragung benutzten Einzelträgerfrequenzen durch Addition der Einzelträgerfrequenzen die Schwebungsfrequenz gebildet, die Phasenunterschiede von mindestens zwei Schwebungsfrequenzen zweier oder mehrerer empfangener Sender bestimmt und daraus der genaue geographische Standort des Empfängers berechnet wird, und daß ein vorher ermittelter ungefährer geographischer Standort des Empfängers aus den von einem oder mehreren Sendern übertragenen Einzelträgerfrequenzen zur vereinfachten Bestimmung der Eindeutigkeit des berechneten Standortes herangezogen wird.

2. Verfahren nach Anspruch 1,
**dadurch gekennzeichnet**, daß die benutzten Einzelträgerfrequenzen eine möglichst geringe Frequenzdifferenz und senderseitig zum Synchronisationszeitpunkt die gleiche Phasenlage aufweisen, wodurch eine Modulation der Einzelträger mit identischen Modulationsinhalten möglich ist.

3. Verfahren nach Anspruch 1 oder 2,
**dadurch gekennzeichnet**, daß die zur geographischen Standortbestimmung genutzten Einzelträgerfrequenzen den systembedingt kleinstmöglichen Frequenzabstand (Δf) aufweisen.

4. Schaltungsanordnung mit einem Empfänger und einer Steuereinheit zur Durchführung des Verfahrens nach einem der Ansprüche 1 bis 3, wobei der Empfänger einen Speicher (SP) aufweist, der in Abhängigkeit von gesendeten individuellen Signalen adressiert wird und im Speicher (SP) zu jedem Sender ein Datensatz abgespeichert ist, der nach der Adressierung von der Steuereinheit (ST) aus dem Speicher (SP) ausgelesen wird,
**dadurch gekennzeichnet**, daß die Steuereinheit (ST) die Phasendifferenzen (Δϕ) der durch Addition von Einzelträgerfrequenzen gebildeten Schwebungsfrequenzen und das Auftreten sowie die zeitliche Abfolge der Einzelträgerfrequenzen, die auch die Information zum Empfänger übertragen, erfaßt, daß in dem im Speicher (SP) adressierten senderspezifischen Datensatz der aufgrund der übertragenen Information bekannte Sender, der Senderstandort und weitere Informationen enthalten sind, und daß die Steuereinheit (ST) aufgrund der ausgelesenen Daten, der Phasendifferenzen (Δϕ) und des ungefähren Standortes den genauen Standort berechnet.

5. Schaltungsanordnung nach Anspruch 4,
**dadurch gekennzeichnet**, daß der exakte geographische Standort und/oder eine Landkarte auf einer Anzeigeeinheit (A) dargestellt ist, daß diese Anzeige (A) über eine Steuereinheit (ST) mit einem Lesegerät (L) verbunden ist, durch das Informationen aus einem Massenspeicher ausgelesen werden können, daß diese Steuereinheit (ST) Detailinformationen auf der Anzeige (A) in Abhängigkeit vom Empfängerstandort oder benutzergesteuert ausgibt, und daß die Landkarte in verschiedenen Maßstäben auf der Anzeige (A) ausgegeben sowie weitere, vom Empfänger empfangene oder aus dem Speicher (SP) ausgelesene Informationen auf der Anzeige (A) ausgegeben sind.

## Claims

1. Method for determining the geographical position of a receiver in a simultaneous broadcasting network, in which two signals of equal frequency transmitted by transmitters are each compared at the receiving end, the phase difference is evaluated to form the transit-time difference and the actual position is determined by a phase comparison hyperbola method, characterized in that a plurality of individual carrier frequencies are simultaneously used for message transmission in the simultaneous broadcasting network, in that the beat frequency is derived from two individual carrier frequencies which are different in each case and used by one transmitter for message transmission by adding the individual carrier frequencies, the phase differences of at least two beat frequencies of two or more received transmitters are determined and the precise geographical position of the receiver is calculated therefrom, and in that a previously determined, approximate geographical position of the receiver derived from the individual carrier frequencies transmitted by one or more transmitters is used for the simplified determination of the unambiguity of the calculated position.

2. Method according to Claim 1, characterized in that the individual carrier frequencies used have as small a frequency difference as possible and have the same phase position at the transmitter end at the synchronization time, as a result of which modulation of the individual carriers with identical modulation contents is possible.

3. Method according to Claim 1 or 2, characterized in that the individual carrier frequencies used to determine the geographical position have the smallest possible frequency spacing (Δf) due to the system.

4. Circuit arrangement comprising a receiver and a control unit for carrying out the method according to one of Claims 1 to 3, the receiver having a memory (SP) which is addressed as a function of the transmitted individual signals and there being stored in the memory (SP) for each transmitter a data set which is read out of the memory (SP) after the control unit (ST) has been addressed, characterized in that the control unit (ST) determines the phase differences (Δϕ) of the beat frequencies derived by adding individual carrier frequencies and the occurrence and also the time sequence of the individual carrier frequencies which also transmit the information to the receiver, in that the transmitter position and further information are contained in the transmitter-specific data set, addressed in the memory (SP), of the transmitters known on the basis of the transmitted information and in that the control unit (ST) calculates the precise position on the basis of the data read out, the phase differences (Δϕ) and the approximate position.

5. Circuit arrangement according to Claim 4, characterized in that the precise geographical position and/or a map is displayed on a display unit (A), in that said display (A) is connected via a control unit (ST) to a reading device (L) by means of which information can be read out of a mass memory, in that said control unit (ST) outputs detailed information on the display (A) as a function of the receiver position or under the control of the user, and in that the map is outputted on various scales on the display (A) and also further information received by the receiver or read out of the memory (SP) are outputted on the display (A).

## Revendications

1. Procédé pour déterminer la position géographique d'un récepteur dans un réseau de radiodiffusion à fréquence commune, selon lequel, côté réception, respectivement deux signaux transmis par des émetteurs et possédant la même fréquence sont comparés, la différence de phase est évaluée pour former la différence de temps de propagation et la position réelle est déterminée en fonction d'un procédé de comparaison de phase à hyperboles,
caractérisé en ce
que dans le réseau à fréquence commune, plusieurs fréquences porteuses individuelles sont utilisées simultanément pour la transmission d'informations,
que la fréquence de battement est formée à partir de deux fréquences porteuses individuelles respectives, utilisées par un émetteur pour la transmission d'informations, par addition des fréquences porteuses individuelles, que la différence de phase d'au moins deux fréquences de battement de deux ou de plusieurs émetteurs reçus est déterminée et qu'à partir de là, la position géographique précise du récepteur est calculée, et
qu'une position géographique approximative du récepteur déterminée antérieurement et obtenue à partir des fréquences porteuses individuelles transmises par un ou plusieurs émetteurs est utilisée pour la détermination simplifiée de la précision de la position calculée.

2. Procédé selon la revendication 1, caractérisé en ce que les fréquences porteuses individuelles utilisées possèdent une différence de fréquence aussi faible que possible et, côté émetteur, la même position de phase par rapport à l'instant de synchronisation, ce qui a pour effet qu'une modulation des porteuses individuelles avec des contenus identiques de modulation est possible.

3. Procédé selon la revendication 1 ou 2, caractérisé en ce que les fréquences porteuses individuelles, utilisées pour la détermination de la position géographique, possèdent l'écart de fréquence (Δf) le plus faible possible conditionné par le système.

4. Montage comportant un émetteur et une commande pour la mise en oeuvre du procédé selon l'une des revendications 1 à 3, dans lequel le récepteur comporte une mémoire (SP), qui est adressée en fonction des signaux individuels émis, et que dans la mémoire (SP) est mémorisé, pour chaque émetteur, un ensemble de données, qui est lu dans la mémoire (SP) après l'adressage de l'unité de commande (ST),
caractérisé en ce que l'unité de commande (ST) détecte la différence de phase (Δϕ) des fréquences de battement formées par addition de fréquences porteuses individuelles et l'apparition ainsi que la séquence temporelle des fréquences porteuses individuelles, qui transmettent également l'information au récepteur, que l'émetteur, connu sur la base de l'information transmise, la position de l'émetteur et d'autres informations sont contenues dans l'ensemble de données, qui est adressé dans la mémoire (SP) et est spécifique à l'émetteur, et que l'unité de commande (ST) calcule la position précise, sur la base des données lues, des différences de phase (Δϕ) et de la position approximative.

5. Montage selon la revendication 4, caractérisé en ce que la position géométrique précise et/ou une carte terrestre sont représentées sur une unité d'affichage (A), que cette unité d'affichage (A) est reliée par l'intermédiaire d'une unité de commande (ST) à un appareil de lecture (L), qui permet de lire des informations dans une mémoire de masse, que cette unité de commande (ST) délivre des informations détaillées à l'unité d'affichage (A) en fonction de la position du récepteur d'une manière commandée par l'utilisateur, et que la carte terrestre est envoyée, avec des échelles différentes, à l'unité d'affichage (A), et que d'autres informations, qui sont reçues par le récepteur ou sont lues dans la mémoire (SP), sont délivrées sur l'unité d'affichage (A).
